# EUROPÄISCHE PATENTSCHRIFT

(11) **EP 1 275 940 B1**
(45) Veröffentlichungstag und Bekanntmachung des Hinweises auf die Patenterteilung: **09.04.2014**
(21) Anmeldenummer: 02009750.7
(22) Anmeldetag: 30.04.2002
(51) Int. Cl.: G01F 1/60, G01F 1/58

(54) **Verfahren zum Betrieb eines magnetischinduktiven Durchflussmessers**
Method for driving a magneto-inductive flow meter
Méthode pour commander un débitmètre magnéto-inductif

(30) Priorität: 09.07.2001 EP 01116550
(43) Veröffentlichungstag der Anmeldung: 15.01.2003
(73) Patentinhaber: Endress + Hauser Flowtec AG, 4153 Reinach BL 1 (CH)
(72) Erfinder: Budmiger, Thomas, 4107 Ettingen (CH)
(74) Vertreter: Andres, Angelika Maria

(56) Entgegenhaltungen:
- EP-A- 0 559 350
- EP-A- 0 641 999
- EP-A1- 0 969 268
- US-A- 5 325 724
- US-A- 5 370 000

## Beschreibung

Die Erfindung betrifft magnetisch-induktive Durchflußmesser mit einem Durchflußaufnehmer, einer Betriebs-Elektronik und einer Auswerte-Elektronik. Im Folgenden wird, falls nötig, der Einfachheit halber nur von Durchflußmessern bzw. Durchflußaufnehmern gesprochen.

Mit magnetisch-induktiven Durchflußmessern läßt sich bekanntlich der Volumendurchfluß einer elektrisch leitenden Flüssigkeit messen, die in einer Rohrleitung fließt; es wird also per definitionem das pro Zeiteinheit durch einen Rohrquerschnitt fließende Volumen der Flüssigkeit gemessen.

Der Durchflußmesser hat ein, üblicherweise nicht-ferromagnetisches, Meßrohr, das in die Rohrleitung flüssigkeitsdicht, z.B. mittels Flanschen oder Verschraubungen, eingesetzt wird. Der die Flüssigkeit berührende Teil des Meßrohrs ist i.a. elektrisch nicht-leitend, damit eine Spannung nicht kurzgeschlossen wird, die nach dem Faraday'schen Induktionsgesetz von einem das Meßrohr durchsetzenden Magnetfeld in der Flüssigkeit induziert wird.

Metall-Meßrohre sind daher üblicherweise innen mit einer elektrisch nichtleitenden Schicht, z.B. aus Hartgummi, Polyfluorethylen etc., versehen und auch i.a. nicht-ferromagnetisch; bei vollständig aus einem Kunststoff oder aus einer Keramik, insb. aus Aluminiumoxid-Keramik, bestehenden Meßrohren ist die elektrisch nicht-leitende Schicht demgegenüber nicht erforderlich.

Das Magnetfeld wird mittels einer wenigstens zwei Feldspulen umfassende Spulenanordnung erzeugt, wobei jede der Feldspulen auf einem gedachten Durchmesser des Meßrohrs von außen an diesem angeordnet ist. Die Feldspulen können Luftspulen ohne Kern oder Spulen mit einem weichmagnetischen Kern sein.

Damit das von den Feldspulen erzeugte Magnetfeld möglichst homogen ist, sind sie im häufigsten und einfachsten Fall identisch zueinander und elektrisch gleichsinnig in Serie geschaltet, sodass sie im Betrieb vom selben Erregerstrom durchflossen werden können. Es ist jedoch auch schon beschrieben worden, die Feldspulen abwechselnd gleich- bzw. gegensinnig vom selben Erregerstrom durchfließen zu lassen, um dadurch ein Strömungsprofil und/oder einen Flüssigkeitspegel im Rohr feststellen zu können, vgl. die US-A 54 93 914, oder um eine Viskosität nicht-newton'scher Flüssigkeiten messen zu können, vgl. US-A 56 46 353.

Der eben erwähnte Erregerstrom wird von einer Betriebs-Elektronik erzeugt; er wird auf einen konstanten Stromwert von z.B. 85 mA geregelt, und seine Stromrichtung wird periodisch umgekehrt; dies dient insb. dazu, sich an den Elektroden aufbauende elektrochemische Störspannungen weitgehend zu kompensieren. Die Stromrichtungsumkehr wird dadurch erreicht, dass die Feldspulen in einer sogenannten T-Schaltung oder einer sogenannten H-Schaltung liegen; zur Stromregelung und -richtungsumkehr vgl. die US-A 44 10 926 oder die US-A 60 31 740.

Die erwähnte induzierte Spannung wird mittels mindestens zwei galvanischen, also von der Flüssigkeit benetzten, oder mittels mindestens zwei kapazitiven, also z.B. innerhalb der Wand des Meßrohrs angeordneten, Elektroden abgegriffen, die im häufigsten Fall diametral einander gegenüberliegend so angeordnet sind, dass ihr gemeinsamer Durchmesser senkrecht zur Richtung des Magnetfelds und somit senkrecht zum Durchmesser ist, auf dem die Feldspulen liegen. Die induzierte Spannung wird mittels einer Auswerte-Elektronik zu einem Volumendurchflußsignal aufbereitet, das registriert, angezeigt oder seinerseits weiterverarbeitet wird.

Die EP 0641999 A1 offenbart ein gattungsgemäßes Verfahren zum Betreiben eines magnetisch-induktiven Durchflussmessers. Fig 1 dieser Druckschrift offenbart zudem temporär einander entgegengerichtete Teilmagnetfelder.

Magnetisch-induktive Durchflußmesser messen den Volumendurchfluß mit optimaler Genauigkeit, wenn die Strömung im Meßrohr gleichmäßig turbulent ist. Unter dieser Bedingung gleichmäßiger Turbulenz wird jeder Durchflußmesser vom Hersteller kalibriert, und es werden die dabei ermittelten Werte des sogenannten Kalibrierfaktors und der Nullpunktabweichung im Durchflußmesser elektronisch gespeichert.

Damit der Durchflußmesser auch nach dessen Verkauf am endgültigen Einsatzort mit dieser Genauigkeit betrieben werden kann, wird vom Hersteller meist eine sogenannte Einlaufstrecke vorgeschrieben, die ein gerades Rohrstück ist und zwischen dem Durchflußmesser und einer Rohrleitungsstelle vorhanden sein muss oder einzufügen ist, die die gleichmäßige Turbulenz stört bzw. stören kann. Solche Rohrleitungsstellen können z.B. Rohrkrümmer oder Ventile etc. sein.

Nun kann aber während des Betriebs des Durchflußmessers das so erzeugte gleichmäßig turbulente Strömungsprofil trotz der Einlaufstrecke aufgrund nicht vorhersehbarer Ereignisse oder Veränderungen der Flüssigkeit ungleichmäßig werden. Dies macht die aktuellen Meßergebnisse inhärent ungenauer oder kann sogar im "worstcase" dazu führen, daß das Meßergebnis falsch ist, ohne daß dies bemerkt wird.

Es ist daher wünschenswert, solche die Genauigkeit verschlechternden Ereignisse während der laufenden Messung feststellen, also ein entsprechendes Fehlersignal abzuleiten, das dann z.B. zur Anzeige gebracht wird, einen Alarm auslöst oder der Korrektur des Meßergebnisses dient etc.

Zum Zwecke des Erfassens des Strömungsprofils, insb. aber zur Kompensation von Störungen im Strömungsprofil, wird in der US-A 53 25 724 vorgeschlagen, beide Feldspulen von Erregerströmen durchfließen zu lassen, die zwar stets gleichgerichtete, jedoch temporär voneinander verschieden starke Teilmagnetfelder erzeugen. Untersuchungen hierzu haben jedoch ergeben, daß diese in der US-A 53 25 724 vorgeschlagene Lösungen nicht den gewünschten Effekt, nämlich ein, insb. im Bereich der Meßelektroden, signifikant asymmetrisch ausgeprägtes Magnetfeld zu erzeugen.

In der EP-A 0 641 999 ist ein magnetisch-induktiver Durchflussmesser offenbart, mit einer oberhalb des Messrohrs angeordneten Spule, einer unterhalb des Messrohrs angeordneten Spule und zwei an den Seiten des Messrohrs einander gegenüberstehen angeordneten Elektroden, wobei die Spulen zur Erzeugung gleichsinniger und gegensinniger Magnetfelder erregbar sind. Die Spannungen zwischen den Elektroden werden mittels einer Korrekturfunktion korrigiert, welche von den Spannungen zwischen den Elektroden bei gleichsinnigen und gegensinnigen Magnetfeldern abhängt.

Eine Aufgabe der Erfindung besteht daher darin, ein Verfahren sowie ein dieses Verfahren umsetzenden Durchflußmesser anzugeben, mit dem im Betrieb ein signifikant asymmetrisches Magnetfeld erzeugt und somit das Strömungsprofil mit hoher Zuverlässigkeit überwacht werden kann.

Zur Lösung dieser Aufgabe besteht die Erfindung in einem Verfahren zum Betreiben eines magnetisch-induktiven Durchflußmessers mit einem Meßrohr, das in eine von einem Fluid durchströmte Leitung eingesetzt ist, welches Verfahren folgende Schritte umfaßt:
- Strömenlassen des Fluids durch das Meßrohr,
- Fließenlassen eines mittels einer Meß- und Betriebsschaltung des Durchflußmessers erzeugten ersten Erregerstroms von vorgebbarer Stromstärke durch eine am Meßrohr angordnete erste Feldspule zum
- Erzeugen eines das Fluid durchsetzenden ersten Teil-Magnetfelds von vorgebbarer mittlerer Magnetfeldstärke,
- Fließenlassen eines mittels der Meß- und Betriebsschaltung erzeugten zweiten Erregerstroms von vorgebbarer Stromstärke durch eine am Meßrohr angordnete zweite Feldspule zum Erzeugen eines das Fluid ebenfalls durchsetzenden zweiten Teil-Magnetfelds von vorgebbarer mittlerer Magnetfeldstärke,
- Variieren der Stromstärke von wenigstens einem der Erregerströme in der Weise, daß die mittleren Magnetfeldstärken der Teil-Magnetfelder zumindest temporär voneinander verschieden sind,
- Umpolen eines der beiden Erregerströme in der Weise, das beide Teil-Magnetfelder bei voneinander verschiedenen mittleren Magnetfeldstärken zumindest temporär einander entgegengerichtet sind,
- Induzieren einer Spannung im strömenden, von den Teil-Magnetfeldern durchsetzten Fluid zum Verändern von an am Meßrohr angeordneten Meßelektroden angelegten Potentialen sowie
- Abführen von den Meßelektroden angelegten Potentialen zum Erzeugen eines von der im strömenden Fluid induzierten Spannung abgeleiteten Meßsignals.

Des weiteren besteht die Erfindung in einem weitergebildeten Verfahren zum Betrieb eines magnetisch-induktiven Durchflußmessers, mit dem der Volumendurchfluß einer elektrisch leitenden und strömenden Flüssigkeit zu messen, ist, mit einem Durchflußaufnehmer, der umfasst:
- das Meßrohr für die strömende Flüssigkeit,
   -- von dem ein die Flüssigkeit berührendes Innenteil elektrisch nicht-leitend ist
      und
   -- das eine Rohrwand aufweist,
- die am oder im Meßrohr angeordnete erste Elektrode,
- die am oder im Meßrohr angeordnete zweite Elektrode,
   -- welche Elektroden auf einem ersten Durchmesser des Meßrohrs liegen,
- die am Meßrohr angeordnete erste Spulenanordnung mit der ersten Feldspule,
- die am Meßrohr angeordnete zweite Spulenanordnung mit der zweiten Feldspule,
   - welche Feldspulen den gleichen Wickelsinn haben,
- welche Spulenanordnungen
   -- auf einem zum ersten Durchmesser senkrechten zweiten Durchmesser des Meßrohrs liegen und
   -- der Erzeugung eines die Rohrwand und die Flüssigkeit durchsetzenden Magnetfelds dienen, wenn in der ersten Feldspule der erste Erregerstrom und in der zweiten Feldspule der zweite Erregerstrom fließt,
- wobei während einer jeden Periodendauer der Erregerströme diese periodisch ihre Amplitude und Stromrichtung derart ändern, dass
   -- während einer ersten Viertel-Periodendauer
   --- die Erregerströme einander gleich sind,
   --- einen Konstantwert haben und
   --- die Feldspulen gleichsinnig in einer ersten Stromrichtung durchfließen,
      -- während einer zweiten Viertel-Periodendauer
   --- der erste Erregerstrom den Konstantwert hat und
   --- die erste Feldspule in einer Gegenrichtung zur ersten Stromrichtung durchfließt,
   --- der zweite Erregerstrom um einen konstanten Betrag kleiner als der Konstantwert ist
   --- und die zweite Feldspule in der ersten Stromrichtung durchfließt,
      -- während einer dritten Viertel-Periodendauer
   --- die Erregerströme den Konstantwert haben und
   --- die Feldspulen in der Gegenrichtung durchfließen sowie
      -- während einer vierten Viertel-Periodendauer der erste Erregerstrom den Konstantwert hat und
   --- die erste Feldspule in der ersten Stromrichtung durchfließt,
   --- der zweite Erregerstrom um den konstanten Betrag kleiner als der Konstantwert ist sowie
   --- die zweite Feldspule in der Gegenrichtung durchfließt, und
- wobei
   -- während der ersten bzw. zweiten bzw. dritten bzw. vierten Viertel-Periodendauer eine erste bzw. zweite bzw. dritte bzw. vierte Spannung der beiden Potentiale gebildet wird,
   -- aus der ersten und der dritten Spannung eine erste Spannungsdifferenz gebildet wird, die der Berechnung eines Volumen-Durchflußsignals dient,
   -- aus der zweiten und der vierten Spannung eine zweite Spannungsdifferenz gebildet wird,
   -- aus der zweiten Spannungsdifferenz und der ersten Spannungsdifferenz ein Quotient gebildet wird,
   -- der Quotient während eines Kalibrationsschritts des magnetisch-induktiven Durchflußmessers bei gleichmäßig turbulenter Strömung ermittelt und als eine Gerätekonstante im Durchflußmesser gespeichert wird,
   -- während des Betriebs laufend Momemtanwerte des Quotienten gebildet werden, die mit der Gerätekonstante verglichen werden, und
   -- bei Überschreiten eines vorgebbaren Schwellenwerts ein Alarm ausgelöst und/oder das Volumen-Durchflußsignal korrigiert wird.

Außerdem besteht die Erfindung in einem magnetisch-induktiver Durchflußmesser für ein in einer Leitung strömendes Fluid, der umfaßt:
- ein in die Leitung einfügbares Meßrohr zum Führen des Fluids,
- eine Meß- und Betriebsschaltung,
- eine von der Meß- und Betriebsschaltung gespeiste Spulenanordnung, die mittels einer am Meßrohr angeordneten ersten Feldspule und mittels einer am Meßrohr angeordneten zweiten Feldspule ein das Meßrohr durchsetzendes Magnetfeld erzeugt,
   -- mit einem ersten Erregerstromgenerator zur Erzeugung eines ersten Erregerstroms, welcher die erste Feldspule zumindest zeitweise durchfließt,
   --mit einem zweiten Erregerstromgenerator zur Erzeugung eines zweiten Erregerstroms, welcher die zweite Feldspule zumindest zeitweise durchfließt,
- wenigstens zwei Meßelektroden zum Abgreifen von Potentialen, die im durch das Meßrohr strömenden und vom Magnetfeld durchsetzten Fluid induziert sind, sowie
- zumindest zeitweise mit den Meßelektroden verbundene Mittel zum Erzeugen wenigstens eines von den im Fluid induzierten Potentialen abgleiteten Meßsignals,
- wobei die beiden Erregerströme mittels des ersten Erregerstromgenerators und mittels des zweiten Erregerstromgenerators so einstellbar sind, dass zumindest zeitweise ein mittels der ersten Feldspule erzeugtes erstes Teil-Magnetfeld eine mittlere Magnetfeldstärke aufweist, die von einer mittleren Magnetfeldstärke eines mittels der zweiten Feldspule zur gleichen Zeit erzeugten zweiten Teil-Magnetfelds verschieden ist.

Nach einer bevorzugten ersten Ausgestaltung des Verfahrens der Erfindung wird die Stromstärke von wenigstens einem der Erregerströme in der Weise variiert, daß die mittleren Magnetfeldstärken der Teil-Magnetfelder temporär zueinander im wesentlichen gleich sind.

Nach einer bevorzugten zweiten Ausgestaltung des Verfahrens der Erfindung wird das Meßsignal wiederholt abgetastet um eine Abtastfolge diskreter Abtastwerte zu erzeugen, die mit einem zeitlichen Verlauf der induzierten Spannung korrespondiert.

Nach einer bevorzugten ersten Ausgestaltung des Verfahrens der Erfindung wird die Abtastfolge in einem Speichermittel der Meß- und Betriebsschaltung abschnittsweise abgespeichert.

Nach einer bevorzugten vierten Ausgestaltung des Verfahrens der Erfindung wird eine erste Spannungsdifferenz zwischen Abtastwerten der Abtastfolge ermittelt, von denen jeder zu einem solchen Zeitpunkt abgetastet worden ist, zu dem die mittleren Magnetfeldstärken der Teil-Magnetfelder zueinander gleich eingestellt worden sind.

Nach einer bevorzugten fünften Ausgestaltung des Verfahrens der Erfindung wird eine zweite Spannungsdifferenz zwischen Abtastwerten der Abtastfolge ermittelt, von denen jeder zu einem solchen Zeitpunkt abgetastet worden ist, zu dem die mittleren Magnetfeldstärken der Teil-Magnetfelder voneinander verschieden eingestellt und die Teil-Magnetfelder einander entgegengerichtet sind.

Nach einer bevorzugten sechsten Ausgestaltung des Verfahrens der Erfindung wird ein Volumendurchflußwert anhand beider Spannungsdifferenzen ermittelt.

Nach einer bevorzugten siebenten Ausgestaltung des Verfahrens der Erfindung wird wird der Volumendurchflußwert von der ersten Spannungsdifferenz abgeleitet und wird die zweite Spannungsdifferenz zum Korrigieren von strömungsprofilbedingten Abweichungen der ersten Spannungsdifferenz vom tatsächlichen Volumendurchfluß verwendet.

Nach einer bevorzugten achten Ausgestaltung des Verfahrens der Erfindung wird die zweite Spannungsdifferenz zum Auslösen eines Alarms verwendet, der ein zu fehlerhaften Meßsignalen führendes Strömungsprofil signalisiert.

Nach einer bevorzugten neunten Ausgestaltung des Verfahrens der Erfindung wird ein Quotienten beider Spannungsdifferenzen zur Ermittlung des Volumendurchflusses und/oder zum Aulösen des Alarms gebildet.

Nach einer bevorzugten zehnten Ausgestaltung des Verfahrens der Erfindung wird der Quotienten mit einem Schwellenwert verglichen, der ein vorbestimmtes, zu überwachendes Strömungsprofil repräsentiert.

Ein Grundgedanke der Erfindung besteht darin, im Meßbetrieb, insb. im Bereich der Meßelektroden, mittels zweier temporär zueinander entgegengerichtet und gleichzeitig unterschiedlich stark ausgeprägter Teil-Magnetfelder zumindest zeitweise ein bezüglich der Meßrohrlängsachse meßbar asymmetrisch ausgeprägtes Magnetfeld zu erzeugen, wodurch bereits geringfügige Abweichungen von dem Strömungsprofil, auf das der Durchflußmesser kalibriert worden ist, und/oder Veränderungen in der Spulenanordnung bzw. den Elektroden detektiert werden können. Ausgehend von der Detektion derartiger Abweichungen vom kalibrierten Normal kann so im Betrieb eine Korrektur der Meßergebnisse oder zumindet eine diese Abweichungen signalisierende Alarmierung erfolgen.

Die Erfindung beruht dabei auch auf der überraschenden Erkenntnis, daß die Teil-Magnetfelder im Rohrquerschnitt mit einer richtungsabhängigen Wichtung zum gesamten Magnetfeld superpositionieren.

Ein Vorteil der Erfindung besteht, darin, daß während der Messungen, insb. spontan, auftretende, nicht vorhersehbare und auch nicht feststellbare Strömungsprofil-Instabilitäten und -Änderungen laufend und sicher erkannt, angezeigt und/oder korrigiert werden können. Ein weiterer Vorteil der Erfindung ist insb. auch im Hinblick auf die in der eingangs erwähnten US-A 56 46 353 beschriebenen Durchflußmesser, bei denen die induzierte Spannung nicht entlang eines Durchmessers, sondern jeweils entlang einer im Meßrohr-Querschnitt liegenden Sehne abgegriffen wird, auch darin zu sehen, daß praktisch ohne wesentliche Änderungen des mechanischen Aufbaus herkömmlicher Durchflussaufnehmer, im Betrieb neben dem momentanen Strömungsprofil und/oder dessen Änderung auch Viskositäten nichtnewton'scher Flüssigkeiten erfaßt werden können.

Das Verfahren der Erfindung und weitere Vorteile werden nun anhand von in den Figuren der Zeichnung dargestellten Zeitdiagrammen und schematisierten Schaltbildern eines magnetisch-induktiven Durchflußmessers näher erläutert.
- Fig. 1: zeigt schematisch und teilweise in der Form eines Blockschaltbilds einen für den Ablauf des Verfahrens der Erfindung geeigneten magnetisch-induktiven Durchflußmesser, und
- Fig. 2: zeigt Zeitdiagramme der periodisch in den Feldspulen fließenden Erregerströme.

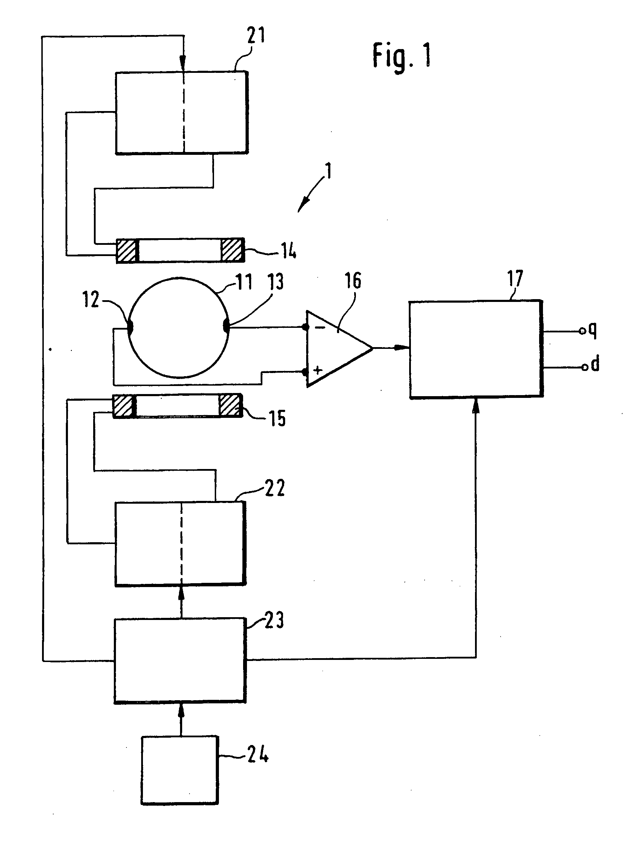

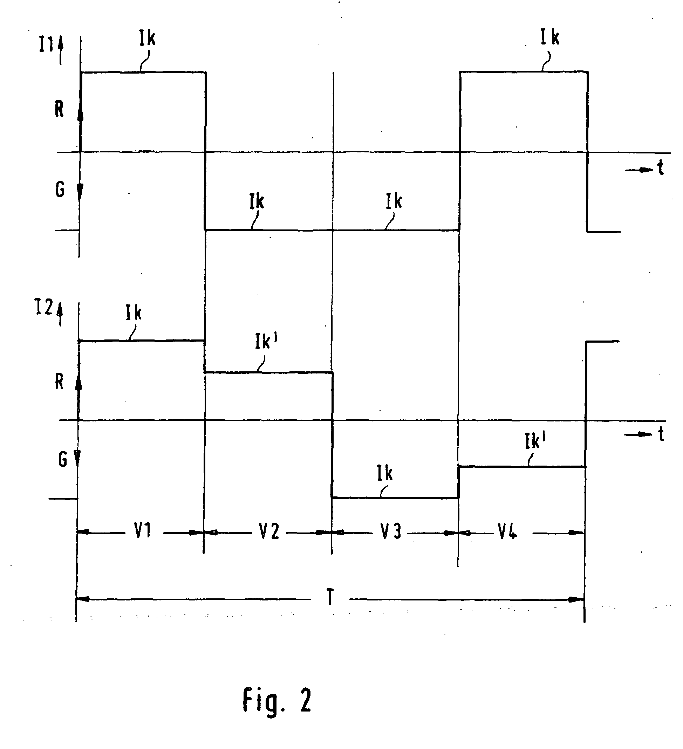

In Fig. 1 ist schematisch und teilweise in der Form eines Blockschaltbilds ein für den Ablauf des Verfahrens der Erfindung geeigneter magnetisch-induktiver Durchflußmesser, mit dem der Volumendurchfluß einer elektrisch leitenden und strömenden Flüssigkeit zu messen ist, und in Fig. 2 sind Zeitdiagramme von im Betrieb auftretenden Größen dargestellt. Die Fig. 1 und 2 werden nicht nacheinander, sondern zusammen erläutert.

Der Durchflußaufmesser, mit dem das Verfahren der Erfindung ausgeführt werden kann, umfasst einen Durchflußaufnehmer 1 und eine Meß- und Betriebsschaltung. Zum Durchflußaufnehmer 1 gehört ein Meßrohr 11, das eine Rohrwand aufweist und durch das im Betrieb in Richtung einer Meßrorhlängsachse die zu messende, leitende Flüssigkeit strömt. Ein die Flüssigkeit berührendes Innenteil des Meßrohrs 11 ist elektrisch nicht-leitend, damit, die von dem erwähnten Magnetfeld induzierte Spannung nicht kurzgeschlossen wird.

Metall-Meßrohre sind daher üblicherweise innen mit einer elektrisch nichtleitenden Schicht, z.B. aus Hartgummi, Polyfluorethylen etc., versehen und auch i.a. nicht-ferromagnetisch; bei vollständig aus einem Kunststoff oder aus einer Keramik, insb. aus Aluminiumoxid-Keramik, bestehenden Meßrohren ist die elektrisch nichtleitende Schicht demgegenüber nicht erforderlich.

Eine an einer Innenseite der Rohrwand des Meßrohrs 11 angeordnete Elektrode 12 dient dem Abgriff eines von einem Magnetfeld induzierten ersten Potentials. Eine in der gleichen Weise angeordnete zweite Elektrode 13 dient dem Abgriff eines vom Magnetfeld induzierten zweiten Potentials (zur Erzeugung des Magnetfelds s.u). Die Elektroden 12, 13 liegen auf einem ersten Durchmesser des Meßrohrs 11.

In Fig. 1 sind die Elektroden 12, 13 galvanische Elektroden, die also die Flüssigkeit berühren. Es können jedoch auch zwei kapazitive, also z.B. innerhalb der Rohrwand des Meßrohrs 11 angeordnete, Elektroden verwendet werden. Jede Elektrode greift für sich ein elektrisches Potential ab, das im Betrieb aufgrund des Faraday-Gesetzes in der Flüssigkeit induziert wird.

Eine Spulenanordnung weist eine am Meßrohr 11 angeordnete erste Feldspule 14 und eine am Meßrohr 11 angeordnete zweite Feldspule 15 auf. Die Feldspulen liegen auf einem zum ersten Durchmesser senkrechten zweiten Durchmesser des Meßrohrs 11.

Die Spulenanordnung dient im Betrieb der Erzeugung eines die Rohrwand und die Flüssigkeit durchsetzenden Magnetfelds. Dieses entsteht, wenn in der Feldspule 14 ein erster Erregerstrom 11 fließen gelassen und somit ein erstes Teil-Magnetfeld von vorgebbarer mittlerer Magnetfeldstärke erzeugt wird und/oder in der Feldspule 15 ein zweiter Erregerstrom 12 fließen gelassen und somit ein zweites Teil-Magnetfeld von vorgebbarer mittlerer Magnetfeldstärke erzeugt wird.

In Fig. 1 ist gezeigt, daß die Feldspulen 14, 15 keinen Kern enthalten, also sogenannte Luftspulen sind. Die Feldspulen 14, 15 können jedoch auch, wie bei derartigen Spulenanordnungen üblich, um einen Kern gewickelt sein, der i.a. weichmagnetisch ist, wobei die Kerne mit Polschuhen zusammenwirken können, vgl. z.B. die US-A 55 40 103.

Die Spulenanordnung ist bevorzugt so ausgeführt, insb. sind die beiden Feldspulen 14, 15 so geformt und dimensioniert, daß das damit erzeugte Magnetfeld innerhalb des Meßrohrs 11 zumindest bezüglich des zweiten Durchmessers symmetrisch, insb. rotationssymmetrisch, ausgebildet ist.

Bei der Erfindung sind die Erregerströme I1, I2 veränderliche bi-polare Ströme die in vorteilhafter Weise z.B. auch als Wechselströme ausgeprägt sein können.

Erfindungsgemäß wird im Betrieb wenigstens einer der beiden Erregerströme I1, I2 in seiner Stromstärke, gemeint ist also der Betrag, insb. die Amplitude, des jeweiligen Erregerstromes 11 bzw. 12, variiert, und zwar so, daß die mittleren Magnetfeldstärken der Teil-Magnetfelder im Meßbetrieb zumindest zeitweise voneinander im wesentlichen verschieden eingestellt sind.

Dieses Variieren der Stromstärke von wenigstens einem der Erregerströme 11, 12 dient dazu, im Meßbetrieb das Magnetfeld zeitweise so zu verzerren, daß es bezüglich der Meßrohrlängsachse und/oder bezüglich des ersten Durchmessers asymmetrisch ausgprägt ist.

Ein möglicher zeitlicher Verlauf für die Erregerströmme I1, I2, bei dem sich deren jeweilige Stromstärke und Stromrichtung während einer Periodendauer T periodisch ändern, ist der Fig. 2 schematisiert dargestellt.

Während einer ersten Viertel-Periodendauer V1 sind die Erregerströme I1, I2 einander gleich und haben einen Konstantwert Ik. Die Erregerströme I1, I2 durchfließen die hier als gleichsinnig gewickelt angenommen Feldspulen 12, 13 gleichsinnig in einer ersten Stromrichtung R, sodass ein Magnetfeld erzeugt wird, das, im Querschnitt des Meßrohrs gesehen, sowohl bezüglich des zweiten Durchmessers als auch bezüglich des ersten Durchmessers weitgehend symmetrisch, insb. auch möglichst homogen, ausgebildet ist.

Während einer zweiten Viertel-Periodendauer V2 hat der Erregerstrom 11 den Konstantwert Ik und durchfließt die Feldspule 12 in einer Gegenrichtung G zur ersten Stromrichtung. Der Erregerstrom 12 ist um einen konstanten Betrag kleiner als der Konstantwert Ik, sodaß er den Stromwert Ik' hat, und durchfließt die Feldspule 13 in der Stromrichtung R. Dadurch sind die beiden Teil-Magnetfelder nunmehr verschieden inhomogen ausgebildet, was insgesamt zu einer Verzerrung des Magnetfeld führt, so daß das Magnetfeld bezüglich des ersten Durchmessers asymmetrisch und dementsprechend auch keinesfalls mehr homogen ausgebildet ist. Für diesen Fall weisen die Teil-Magnetfelder in entsprechender Weise auch voneinander verschiedene mittlere Magnetfeldstärken auf.

Während einer dritten Viertel-Periodendauer V3 sind die Erregerströme I1, I2 wieder einander gleich und haben den Konstantwert Ik. Die Erregerströme I1, I2 durchfließen die Feldspulen 12, 13 gleichsinnig in der Gegenrichtung G, sodass sie wieder ein homogenes Magnetfeld erzeugen, das nun aber seine Richtung gegenüber der Richtung in der Viertel-Periodendauer V1 umgekehrt hat.

Schließlich hat während einer vierten Viertel-Periodendauer V4 der Erregerstrom 11 den Konstantwert lk und durchfließt die Feldspule 12 in der Stromrichtung R. Der Erregerstrom 12 ist wieder um den konstanten Betrag kleiner als der Konstantwert Ik, sodass er ebenfalls den Stromwert Ik' hat, und durchfließt die Feldspule 13 in der Gegenrichtung G. Das Magnetfeld ist nun wieder verzerrt, jedoch im Vergleich zur Verzerrung in der Viertel-Periodendauer V2 in Gegenrichtung zu der Richtung der dortigen Verzerrung.

In Fig. 2 ist durch die Darstellung der Stromrichtung R als positive Ordinate und der Gegenrichtung G als negativer Ordinate bedingt, dass der Konstantwert Ik und der Stromwert Ik' teils positiv, teils negativ erscheinen. Da diese Ströme jedoch in miteinander elektrisch nicht verbundenen Feldspulen fließen, addieren sich die Ströme nicht, sondern erst in der räumlichen Form des Magnetfelds wirkt sich die gleichsinnige bzw. entgegengesetzte Richtung der Erregerströme aus. Während der Viertel-Periodendauern V2, V4 ist diese Wirkung praktisch die gleiche, wie wenn die beiden Feldspulen in Serie geschaltet wären.

Zur Erzeugung des Erregerstroms 11 ist in Fig. 1 ein erster Erregerstromgenerator und -umpoler 21 vorgesehen, der auf die Konstantwerte lk, lk' regelt und die Umschaltungen entsprechend Fig. 2 vornimmt. Ebenso werden der Erregerstrom 12 von einem zweiten Erregerstromgenerator und - umpoler 22 erzeugt, der die Ströme Ik, Ik' wiederum konstant regelt und die Umschaltungen entsprechend Fig. 2 vornimmt; vgl. zur Stromregelung und - umpolung z.B. die US-A 44 10 926 oder die US-A 60 31 740. Das Umpolen wird von einer Ablaufsteuerung 23 bewirkt, die von einem Taktgenerator 24 gesteuert ist und auch mit der Auswerte-Elektronik 17 zusammenarbeitet.

In Fig. 1 sind wie üblich die Elektroden 12, 13 mit einem nicht-invertierenden bzw. einem invertierenden Eingang eines Differenzverstärkers 16 verbunden, der aus den Potentialen an den Elektroden eine als Meßsignal dienende Spannung an seinem Ausgang bildet. Da derartige Differenzverstärker meist nur einen von eins nur wenig verschiedenen Verstärkungsfaktor haben, kann für die Zwecke der Erläuterung der Erfindung die Spannung am Ausgang des Differenzverstärker 16 mit der Spannung an dessen Eingängen gleichgesetzt werden.

Für die weitere Erläuterung der Erfindung ist nun wichtig, dass während jeder der vier Viertel-Periodendauern V1, V2, V3, V4 ein anderes Meßsignal gebildet wird, nämlich während der ersten bzw. zweiten bzw. dritten bzw. vierten Viertel-Periodendauer abgeleitet von einer ersten bzw. zweiten bzw. dritten bzw. vierten Spannung U1, U2, U3, U4. Zur weiteren Verarbeitung des Meßsignals wird dieses in der üblichen Weise wiederholt, insb. mit einer einzigen Abtastfrequenz, abgetastet, und zwar mindest einmal während der jeweiligen Viertel-Periodendauer. Eine durch das wiederholte Abtasten des Meßsignals erzeugte Abtastfolge diskreter Abtastwerte korrespondiert somit sehr präzise mit einem zeitlichen Verlauf der im Fluid induzierten Spannung.

Nach einer bevorzugten Ausgestaltung der Erfindung wird die so erzeugte Abtastfolge digitalisiert und in einem in der Meß- und Betriebsschaltung vorgesehenen Speichermittel, insb. einem flüchtigen Datenspeicher, für eine Weiterverarbeitung in der Meß- und Betriebsschaltung vorgehalten.

Im weiteren Fortgang der Messung wird anhand der bevorzugt digital zwischengespeicherten Abtastfolge aus einem die Spannung U1 repräsentierenden ersten Abtastwert U1' und einem die Spannung U3 repräsentierenden zweiten Abtastwert U3' eine erste Spannungsdifferenz Δ U31' = U3' - U1' gebildet, die in üblicher Weise der Berechnung eines Volumen-Durchflußsignals q mittels einer Auswerte-Elektronik 17 dient. Anders gesagt, die Spannungsdifferenz ΔU31' wird zwischen solchen Abtastwerten der Abtastfolge ermittelt, von denen jeder zu einem solchen Zeitpunkt abgetastet worden ist, zu dem die mittleren Magnetfeldstärken der Teil-Magnetfelder zueinander gleich eingestellt worden sind.

Des weiteren wird erfindungsgemäß aus einem die Spannung U2 repräsentierenden dritten Abtastwert U2' und einem die Spannung U4 repräsentierenden vierten Abtastwert U4' eine zweite Spannungsdifferenz Δ U42' = U4' - U2' gebildet. Diese Spannungsdifferenz ΔU42' dient praktisch als ein Maß für eine momentane Abweichung des Strömungsprofils vom erwarteten, insb. aber vom einkalibrierten, Strömungsprofil. In vorteilhafter Weise kann die Spannungsdifferenz ΔU42' z.B. unter Bildung eines Quotienten Q = U42' / U31' auf den momentanen gemessenen Durchfluß normiert werden, was dazu führt, daß bei verschiedenen Durchflüssen auftretende Strömungsprofile miteinander weitestgehend vergleichbar gemacht werden.

Nach einer weiteren bevorzugten Ausgestaltung der Erfindung werden während des Betriebs des Durchflußmessers wiederholt Momentanwerte des Quotienten Q gebildet und die mit einer entsprechenden Gerätekonstante verglichen. Bei Überschreiten eines vorgebbaren Schwellenwerts wird dies durch ein Signal d angezeigt und/oder es wird ein Alarm ausgelöst und/oder es wird das Volumen-Durchflußsignal korrigiert. Die Gerätekonstante kann z.B. ein während einer Kalibrierung des magnetisch-induktiven Durchflußmessers bei gleichmäßig oder auch stationär turbulenter Strömung ermitteltet und in der Auswerte-Elektronik 17 des Durchflußmessers gespeicherter Quotient Q sein.

Es liegt im Rahmen der Erfindung, die eben erwähnten Differenz- und Quotienbildungen mindestens teilweise durch einen entsprechend programmierten Mikroprozessor zu realisieren, der dann Bestandteil der Auswerte-Elektronik 17 ist und dem ein Analog/Digital-Wandler vorgeschaltet ist, vgl. z.B. die US-A 59 07 103. Des weiteren können die mittleren Magnetfeldstärken der Teil-Magnetfelder z.B. auch auf mehrere voneinander verschiedene Pegel eingestellt werden.

## Patentansprüche

1. Verfahren zum Betreiben eines magnetisch-induktiven Durchflußmessers mit einem Meßrohr, das in eine von einem Fluid durchströmte Leitung eingesetzt ist, welches Verfahren folgende Schritte umfaßt:
- Strömenlassen des Fluids durch das Meßrohr,
- Fließenlassen eines mittels einer Meß- und Betriebsschaltung des Durchflußmessers erzeugten ersten Erregerstroms von vorgebbarer Stromstärke durch eine am Meßrohr angordnete erste Feldspule zum Erzeugen eines das Fluid durchsetzenden ersten Teil-Magnetfelds von vorgebbarer mittlerer Magnetfeldstärke,
- Fließenlassen eines mittels der Meß- und Betriebsschaltung erzeugten zweiten Erregerstroms von vorgebbarer Stromstärke durch eine am Meßrohr angordnete zweite Feldspule zum Erzeugen eines das Fluid ebenfalls durchsetzenden zweiten Teil-Magnetfelds von vorgebbarer mittlerer Magnetfeldstärke,
- Induzieren einer Spannung im strömenden, von den Teil-Magnetfeldern durchsetzten Fluid zum Verändern von an am Meßrohr angeordneten Meßelektroden abgegriffenen Potentialen sowie
- Abführen der von den Meßelektroden abgegriffenen Potentialen zum Erzeugen eines
von der im strömenden Fluid induzierten Spannung abgeleiteten Messsignals,
**gekennzeichnet durch**,
- Variieren der Stromstärke von wenigstens einem der Erregerströme in der Weise, daß die mittleren Magnetfeldstärken der Teil-Magnetfelder zumindest temporär voneinander verschieden sind,
- Umpolen eines der beiden Erregerströme, also des Betrages des jeweiligen Erregerstromes, in der Weise, dass beide Teil-Magnetfelder bei voneinander verschiedenen mittleren Magnetfeldstärken zumindest temporär einander entgegengerichtet sind.

2. Verfahren nach Anspruch 1, das folgenden weiteren Schritt umfaßt:
- Variieren der Stromstärke von wenigstens einem der Erregerströme in der Weise, daß die mittleren Magnetfeldstärken der Teil-Magnetfelder temporär zueinander im wesentlichen gleich sind.

3. Verfahren nach Anspruch 1 oder 2, das folgenden weiteren Schritt umfaßt:
- wiederholtes Abtasten des Meßsignals zum Erzeugen einer Abtastfolge diskreter Abtastwerte, die mit einem zeitlichen Verlauf der induzierten Spannung korrespondiert.

4. Verfahren nach Anspruch 3, das folgenden weiteren Schritt umfaßt:
- abschnittsweises Speichern der Abtastfolge in einem Speichermittel der Meß- und Betriebsschaltung.

5. Verfahren nach Anspruch 3 oder 4, das folgenden weiteren Schritt umfaßt:
- Ermitteln einer ersten Spannungsdifferenz zwischen Abtastwerten der Abtastfolge von denen jeder zu einem solchen Zeitpunkt abgetastet worden ist, zu dem die mittleren Magnetfeldstärken der Teil-Magnetfelder zueinander gleich eingestellt worden sind.

6. Verfahren nach Anspruch 5, das folgenden weiteren Schritt umfaßt:
- Ermitteln einer zweiten Spannungsdifferenz anhand von Abtastwerten der Abtastfolge von denen jeder zu einem solchen Zeitpunkt abgetastet worden ist, zu dem die mittleren Magnetfeldstärken der Teil-Magnetfelder voneinander verschieden eingestellt und die Teil-Magnetfelder einander entgegengerichtet sind.

7. Verfahren nach Anspruch 6, das folgenden weiteren Schritt umfaßt:
- Ermitteln eines Volumendurchflußwerts anhand beider Spannungsdifferenzen.

8. Verfahren nach Anspruch 7, das folgende weitere Schritte umfaßt:
- Ableiten des Volumendurchflußwertes von der ersten Spannungsdifferenz und
- Verwenden der zweiten Spannungsdifferenz als ein Maß für eine momentane Abweichung des Strömungsprofils von einem erwarteten Strömungsprofil zum Korrigieren von strömungsprofilbedingten Abweichungen der ersten Spannungsdifferenz.

9. Verfahren nach einem der Ansprüche 6 bis 8, das folgenden weiteren Schritt umfaßt:
- Verwenden der zweiten Spannungsdifferenz zum Auslösen eines Alarms, der ein zu fehlerhaften Meßsignalen führendes Strömungsprofil signalisiert.

10. Verfahren nach einem der Ansprüche 6 bis 9, das folgenden weiteren Schritt umfaßt:
- Bildung eines Quotienten beider Spannungsdifferenzen.

11. Verfahren nach Anspruch 10, das folgenden weiteren Schritt umfaßt:
- Vergleichen des Quotienten mit einem Schwellenwert, der ein vorbestimmtes, zu überwachendes Strömungsprofil repräsentiert.

12. Verfahren nach einem der Ansprüche 1 bis 11 zum Betreiben eines magnetisch-induktiven Durchflussmessers mit einem Messrohr, wobei mit dem magnetisch-induktiven Durchflussmesser der Volumendurchfluß des elektrisch leitenden und strömenden Fluids zu messen ist, welcher magnetisch-induktive Durchflussmesser einen Durchflußaufnehmer (1) aufweist, der umfasst:
- das Meßrohr (11) für das strömende Fluid
-- von dem ein die Flüssigkeit berührendes Innenteil elektrisch nicht-leitend ist und
-- das eine Rohrwand aufweist,
- die am oder im Meßrohr angeordnete erste Elektrode (12),
- die am oder im Meßrohr angeordnete zweite Elektrode (13),
-- welche Elektroden auf einem ersten Durchmesser des Meßrohrs liegen,
- die am Meßrohr angeordnete erste Spulenanordnung mit der ersten Feldspule (14),
- die am Meßrohr angeordnete zweite Spulenanordnung mit der zweiten Feldspule (15),
- welche Feldspulen den gleichen Wickelsinn haben,
- welche Spulenanordnungen
- auf einem zum ersten Durchmesser senkrechten zweiten Durchmesser des Meßrohrs (11) liegen und
-- der Erzeugung eines die Rohrwand und das Fluid durchsetzenden Magnetfelds dienen, wenn in der ersten Feldspule der erste Erregerstrom (11) und in der zweiten Feldspule der zweite Erregerstrom (12) fließt,
- wobei während einer Periodendauer (T) der Erregerströme (11, 12) diese periodisch ihre Amplitude und Stromrichtung derart ändern, dass
-- während einer ersten Viertel-Periodendauer (V1)
--- die Erregerströme (11, 12) einander gleich sind,
-- einen Konstantwert (lk) haben und
--- die Feldspulen (14, 15) gleichsinnig in einer ersten Stromrichtung (R) durchfließen,
-- während einer zweiten Viertel-Periodendauer (V2)
--- der erste Erregerstrom (I1) den Konstantwert (Ik) hat und
--- die erste Feldspule (14) in einer Gegenrichtung (G) zur ersten Stromrichtung (R) durchfließt,
--- der zweite Erregerstrom (I2) um einen konstanten Betrag kleiner als der Konstantwert (Ik) ist,
--- und die zweite Feldspule (15) in der ersten Stromrichtung (R) durchfließt,
-- während einer dritten Viertel-Periodendauer (V3)
-- die Erregerströme (I1, I2) den Konstantwert (Ik) haben und
--- die Feldspulen (14, 15) in der Gegenrichtung (G) durchfließen sowie
--- während einer vierten Viertel-Periodendauer (V4)
-- der erste Erregerstrom (11) den Konstantwert (Ik) hat und
-- die erste Feldspule (14) in der ersten Stromrichtung (R) durchfließt,
--- der zweite Erregerstrom (I2) um den konstanten Betrag kleiner als der Konstantwert (Ik) ist und
--- die zweite Feldspule (15) in der Gegenrichtung (G) durchfließt, und
- wobei
-- während der ersten bzw. zweiten bzw. dritten bzw. vierten Viertel-Periodendauer eine ersten bzw. zweite bzw. dritte bzw. vierte Spannung der beiden Potentiale gebildet wird,
-- aus der ersten und der dritten Spannung eine erste Spannungsdifferenz gebildet wird, die der Berechnung eines Volumen-Durchflußsignals dient,
-- aus der zweiten und der vierten Spannung eine zweite Spannungsdifferenz gebildet wird,
-- aus der zweiten Spannungsdifferenz und der ersten Spannungsdifferenz ein Quotient gebildet wird,
-- der Quotient während eines Kalibrationsschritts des magnetisch-induktiven Durchflußmessers bei gleichmäßig turbulenter Strömung ermittelt und als eine Gerätekonstante im Durchflußmesser gespeichert wird,
-- während des Betriebs laufend Momemtanwerte des Quotienten gebildet werden, die mit der Gerätekonstante verglichen werden, und
-- bei Überschreiten eines vorgebbaren Schwellenwerts ein Alarm ausgelöst oder das Volumen-Durchflußsignal korrigiert wird.

13. Magnetisch-induktiver Durchflußmesser für ein in einer Leitung strömendes Fluid, der umfaßt:
- ein in die Leitung einfügbares Meßrohr zum Führen des Fluids,
- eine Meß- und Betriebsschaltung,
- eine von der Meß- und Betriebsschaltung gespeiste Spulenanordnung, die mittels einer am Meßrohr angeordneten ersten Feldspule und mittels einer am Meßrohr angeordneten zweiten Feldspule ein das Meßrohr durchsetzendes Magnetfeld erzeugt,
-- mit einem ersten Erregerstromgenerator zur Erzeugung eines ersten Erregerstroms, welcher die erste Feldspule zumindest zeitweise durchfließt,
--mit einem zweiten Erregerstromgenerator zur Erzeugung eines zweiten Erregerstroms, welcher die zweite Feldspule zumindest zeitweise durchfließt,
- wenigstens zwei Meßelektroden zum Abgreifen von Potentialen, die im durch das Meßrohr strömenden und vom Magnetfeld durchsetzten Fluid induziert sind, sowie
- zumindest zeitweise mit den Meßelektroden verbundene Mittel zum Erzeugen
wenigstens eines von den im Fluid induzierten Potentialen abgleiteten Meßsignals, **dadurch gekennzeichnet, dass** die Mess- und Betriebsschaltung derart eingerichtet ist,
dass die beiden Erregerströme, also der Betrag des jeweiligen Erregerstromes,
mittels des ersten Erregerstromgenerators und mittels des zweiten Erregerstromgenerators so einstellbar sind, daß ein Variieren von Stromstärke von wenigstens einem der Erregerströme in der Weise, daß die mittleren Magnetfeldstärken der Teil-Magnetfelder zumindest temporär voneinander verschieden sind, erfolgt und
- ein Umpolen eines der beiden Erregerströme, also des Betrages des jeweiligen Erregerstromes, in der Weise, dass beide Teil-Magnetfelder bei voneinander verschiedenen mittleren Magnetfeldstärken zumindest temporär einander entgegengerichtet sind, erfolgt.

## Claims

1. Method for operating an electromagnetic flowmeter with a measuring tube which is inserted into a pipe through which fluid flows, said method comprising the following steps:
- Allowing the fluid to flow through the measuring tube
- Allowing a first exciter current, of pre-definable strength, which is generated using a measuring and operation circuit of the flowmeter, to flow through a first field coil that is arranged on the measuring tube in order to generate a first partial magnetic field, of pre-definable average magnetic field strength, which passes through the fluid
- Allowing a second exciter current, of pre-definable strength, which is generated using the measuring and operation circuit, to flow through a second field coil that is arranged on the measuring tube in order to generate a second partial magnetic field, of pre-definable average magnetic field strength, which also passes through the fluid
- Induction of a voltage in the flowing fluid through which the partial magnetic fields pass in order to change potentials measured at measuring electrodes arranged on the measuring tube, and
- Diversion of the potentials measured by the measuring electrodes in order to generate a measuring signal derived from the voltage induced in the flowing fluid, **characterized in that**
- The current strength of at least one of the exciter currents is varied in such a way that the average magnetic field strengths of the partial magnetic fields differ from one another at least temporarily
- The polarity of one of the two exciter currents - i.e. the value of the exciter current concerned - is reversed in such a way that both partial magnetic fields are at least temporarily opposed to one another when the average magnetic fields differ from one another.

2. Method as claimed in Claim 1, further comprising the following additional step:
- Variation of the current strength of at least one of the exciter currents in such a way that the average magnetic field strengths of the partial magnetic fields are temporarily essentially equal.

3. Method as claimed in Claim 1 or 2, further comprising the following additional step:
- Repeated scanning of the measuring signal in order to generate a sampling sequence of discrete sampled values that correspond to a time-based pattern of the induced voltage.

4. Method as claimed in Claim 3, further comprising the following additional step:
- Saving the sampling sequence in sections in a storage medium of the measuring and operation circuit.

5. Method as claimed in Claim 3 or 4, further comprising the following additional step:
- Determination of a first voltage difference between the sampled values of the sampling sequence, each of which having been sampled at a time when the average magnetic field strengths of the partial magnetic fields have been set equally in relation to one another.

6. Method as claimed in Claim 5, further comprising the following additional step:
- Determination of a second voltage difference using sampled values of the sampling sequence, each of which having been sampled at a time when the average magnetic field strengths of the partial magnetic fields are set to be different in relation to one another and the partial magnetic fields are opposed to one another.

7. Method as claimed in Claim 6, further comprising the following additional step:
- Determination of a volume flow value using both differences in voltage.

8. Method as claimed in Claim 7, further comprising the following additional step:
- Derivation of the volume flow value from the first voltage difference and
- Use of the second voltage difference as a measure for the current deviation of the flow profile from an expected flow profile in order to correct deviations of the first voltage difference that are caused by the flow profile.

9. Method as claimed in one of the Claims 6 to 8, further comprising the following additional step:
- Use of the second voltage difference to trigger an alarm which signals a flow profile which leads to incorrect measuring signals.

10. Method as claimed in one of the Claims 6 to 9, further comprising the following additional step:
- Formation of a quotient of the two differences in voltage.

11. Method as claimed in Claim 10, further comprising the following additional step:
- Comparison of the quotient with a threshold value which represents a predefined flow profile which is to be monitored.

12. Method as claimed in one of the Claims 1 to 11 to operate an electromagnetic flowmeter with a measuring tube, wherein the electromagnetic flowmeter is to be used to measure the volume flow of the electrically conductive, flowing fluid, said electromagnetic flowmeter having a flow sensor (1) comprising:
- the measuring tube (11) for the flowing fluid
--of which an internal part which comes into contact with the liquid is electrically nonconductive and
-- which has a pipe wall
- the first electrode (12) which is arranged on or in the measuring tube
- the second electrode (13) which is arranged on or in the measuring tube
-- said electrodes being located on a first diameter of the measuring tube
- the first coil arrangement arranged on the measuring tube with the first field coil (14)
- the second coil arrangement arranged on the measuring tube with the second field coil (15)
-- said field coils having the same winding direction
- said coil arrangements
-- being located on a second diameter of the measuring tube (11) which is perpendicular to the first diameter, and
-- serving to generate a magnetic field which passes through the pipe wall and the fluid if the first excitation current (I1) flows in the first field coil and the second excitation current (I2) flows in the second field coil
- wherein during a period duration (T) of the excitation currents (I1, I2) the amplitude and current direction of these currents change periodically in such a way that
-- during a first quarter period duration (V1)
--- the excitation currents (I1, I2) are equal,
--- they have a constant value (Ik) and
--- they flow through the field coils (14, 15) concordantly in a first flow direction (R)
-- during a second quarter period duration (V2)
--- the first excitation current (I1) has a constant value (Ik) and
--- flows through the first field coil (14) in an opposite direction (G) to the first flow direction (R)
-- the second excitation current (12) is smaller than the constant value (Ik) by a constant amount
--- and flows through the second field coil (15) in the first flow direction (R),
-- during a third quarter period duration (V3)
--- the excitation currents (I1, I2) have a constant value (Ik), and
-- flow through the field coils (14, 15) in the opposite direction (G), and
--- during a fourth quarter period duration (V4)
---the first excitation current (I1) has the constant value (Ik), and
--- flows through the first field coil (14) in the first current direction (R),
--- the second excitation current (I2) is smaller than the constant value (Ik) by a constant value, and
--- flows through the second field coil (15) in the opposite direction (G), and
- wherein
-- during the first or second or third or fourth quarter period duration, a first, second, third or fourth voltage respectively of the two potentials is formed
-- a first voltage difference is formed from the first and third voltage which is used to calculate a volume flow signal
-- a second voltage difference is formed from the second and fourth voltage
-- a quotient is formed from the second voltage difference and the first voltage difference
-- the quotient is determined during a calibration step of the electromagnetic flowmeter with evenly turbulent flow and is saved as a device constant in the flowmeter
-- instantaneous values of the quotient are constantly formed during operation and compared with the device constant, and
-- if a pre-definable threshold value is exceeded an alarm is triggered or the volume flow signal is corrected.

13. Electromagnetic flowmeter for a fluid flowing through a pipe, comprising:
- a measuring tube, used to conduct the fluid, which can be inserted into the pipe
- a measuring and operation circuit
- a coil arrangement which is powered by the measuring and operation circuit and generates a magnetic field that passes through the measuring tube using a first field coil which is arranged on the measuring tube and using a second field coil which is arranged on the measuring tube
-- with a first excitation current generator to generate a first excitation current which flows through the first field coil at least temporarily
--with a second excitation current generator to generate a second excitation current which flows through the second field coil at least temporarily
- at least two measuring electrodes to measure potentials that are induced in the fluid which flows through the measuring tube and through which the magnetic field passes, and
- means, connected at least temporarily with the measuring electrodes, for generating at least one measuring signal derived from the potentials induced in the fluid,
**characterized in that** the measuring and operation circuit is set up in such a way that the two excitation currents, i.e. the value of the excitation current concerned, can be adjusted using the first excitation current generator and using the second excitation current generator in such a way that the current strength of at least one of the excitation currents varies in such a way that the average magnetic field strengths of the partial magnetic fields differ from one another at least temporarily, and
- The polarity of one of the two exciter currents - i.e. the value of the exciter current concerned - is reversed in such a way that both partial magnetic fields are at least temporarily opposed to one another when the average magnetic field strengths differ from one another.

## Revendications

1. Procédé destiné à l'exploitation d'un débitmètre magnéto-inductif avec un tube de mesure, lequel est inséré dans une conduite parcourue par un fluide, lequel procédé comprend les étapes suivantes :
- Ecoulement du fluide à travers le tube de mesure ;
- Circulation d'un premier courant d'excitation généré au moyen d'un circuit de mesure et d'exploitation du débitmètre, d'une intensité prédéfinissable par une première bobine d'excitation disposée sur le tube de mesure, destinée à générer un premier champ magnétique partiel traversant le fluide, d'une intensité de champ magnétique moyenne, prédéfinissable,
- Circulation d'un deuxième courant d'excitation généré au moyen d'un circuit de mesure et d'exploitation, d'une intensité prédéfinissable par une deuxième bobine d'excitation disposée sur le tube de mesure, destinée à générer un deuxième champ magnétique partiel traversant également le fluide, d'une intensité de champ magnétique moyenne, prédéfinissable,
- Induction d'une tension dans le fluide s'écoulant, traversé par les champs magnétiques partiels, destinée à modifier les potentiels prélevés sur les électrodes de mesure disposées sur le tube de mesure, ainsi que
- Acheminement des potentiels prélevés sur les électrodes de mesure en vue de la génération d'un signal de mesure dérivé de la tension induite par le fluide s'écoulant, **caractérisé par** la
- Variation de l'intensité d'au moins l'un des courants d'excitation, de telle sorte que les intensités de champ magnétique moyennes des champs magnétiques partiels sont au moins temporairement différentes,
- Inversion de l'un des deux courants d'excitation, c'est-à-dire de la valeur du courant d'excitation concerné, de telle sorte que les deux champs magnétiques partiels pour des intensités de champ magnétique moyennes différentes sont au moins temporairement opposés l'un par rapport à l'autre.

2. Procédé selon la revendication 1, lequel comprend l'étape suivante :
- Variation de l'intensité d'au moins l'un des courants d'excitation, de telle sorte que les intensités de champ magnétique moyennes des champs magnétiques partiels sont au moins temporairement pour l'essentiel égales.

3. Procédé selon la revendication 1 ou 2, lequel comprend l'étape suivante :
- Echantillonnage répété du signal de mesure en vue de la génération d'une séquence de valeurs d'échantillonnage discrètes, qui correspondent à une évolution dans le temps de la tension induite.

4. Procédé selon la revendication 3, lequel comprend l'étape suivante :
- Enregistrement par plages de la séquence d'échantillonnage dans un moyen de mémorisation du circuit de mesure et d'exploitation.

5. Procédé selon la revendication 3 ou 4, lequel comprend l'étape suivante :
- Détermination d'une première différence de tension entre les valeurs de la séquence d'échantillonnage, parmi lesquelles chacune d'entre elle a été échantillonnée à l'instant pendant lequel les intensités de champ magnétiques moyennes des champs magnétiques partiels ont été réglées à des valeurs égales.

6. Procédé selon la revendication 5, lequel comprend l'étape suivante :
- Détermination d'une première différence de tension sur la base de valeurs de la séquence d'échantillonnage, parmi lesquelles chacune d'entre elle a été échantillonnée à l'instant pendant lequel les intensités de champ magnétique moyennes des champs magnétiques partiels sont réglées à des valeurs différentes, et pendant lequel les champs magnétiques partiels sont opposés l'un par rapport à l'autre.

7. Procédé selon la revendication 6, lequel comprend l'étape suivante :
- Détermination d'une valeur de débit volumique sur la base de deux différences de tension.

8. Procédé selon la revendication 7, lequel comprend l'étape suivante :
- Dérivation de la valeur de débit volumique de la première différence de tension et
- Utilisation de la deuxième différence de tension comme valeur pour un écart momentané du profil d'écoulement par rapport à un profil d'écoulement attendu, en vue de corriger les écarts conditionnés par le profil d'écoulement de la première différence de tension.

9. Procédé selon la revendication 6 à 8, lequel comprend l'étape suivante :
- Utilisation de la deuxième différence de tension pour le déclenchement d'une alarme, qui signale un profil d'écoulement conduisant à des signaux de mesure erronés.

10. Procédé selon la revendication 6 à 9, lequel comprend l'étape suivante :
- Formation d'un quotient des deux différences de tension.

11. Procédé selon la revendication 10, lequel comprend l'étape suivante :
- Comparaison du quotient avec une valeur seuil, qui représente un profil d'écoulement prédéfini à surveiller.

12. Procédé selon la revendication 1 à 11 destiné à l'exploitation d'un débitmètre magnéto-inductif avec un tube de mesure, pour lequel le débit volumique du fluide électroconducteur et s'écoulant dans le tube doit être mesuré avec le débitmètre magnéto-inductif, lequel débitmètre magnéto-inductif comporte un transmetteur de pression (1), comprenant :
- le tube de mesure (11) pour le fluide s'écoulant
-- tube pour lequel une partie intérieure en contact avec le liquide est non électroconductrice et
-- qui présente une paroi de tube
- la première électrode (12) disposée sur ou dans le tube de mesure,
- la deuxième électrode (13) disposée sur ou dans le tube de mesure,
-- lesquelles électrodes se trouvent sur un premier diamètre du tube de mesure,
- le premier dispositif à bobine disposé sur le tube de mesure, comprenant la première bobine d'excitation (14),
- le deuxième dispositif à bobine disposé sur le tube de mesure, comprenant la deuxième bobine d'excitation (15),
-- lesquelles bobines d'excitation présentent le même sens d'enroulement,
- lesquels dispositifs à bobine
-- se trouvent sur un deuxième diamètre perpendiculaire au premier diamètre du tube de mesure (11) et
-- servent à la génération d'un champ magnétique traversant la paroi de tube et le fluide, lorsque le premier courant d'excitation (I1) circule dans la première bobine d'excitation et le deuxième courant d'excitation (I2) circule dans la deuxième bobine d'excitation,
- les courants d'excitation (I1, I2) modifiant périodiquement pendant une période (T) leur amplitude et sens du courant, de telle sorte que
-- pendant un premier quart de période (V1)
--- les courants d'excitation (I1, I2) sont égaux,
--- ont une valeur constante (Ik) et
--- circulent dans le même sens à travers les bobines d'excitation (14, 15), selon un premier sens de courant (R),
-- pendant un deuxième quart de période (V2)
--- le premier courant d'excitation (I1) a la valeur constante (Ik) et
--- circule à travers la première bobine d'excitation (14) dans un sens inverse (G) par rapport au premier sens de courant (R),
--- le deuxième courant d'excitation (I2) est inférieur d'une valeur constante à la valeur constante (Ik),
--- et circule à travers la deuxième bobine d'excitation (15) dans le premier sens de courant (R),
-- pendant un troisième quart de période (V3)
--- les courants d'excitation (I1, 12) ont la valeur constante (Ik) et
--- circulent à travers les bobines d'excitation (14, 15) dans le sens inverse (G) ainsi que
-- pendant un quatrième quart de période (V4)
--- le premier courant d'excitation (I1) a la valeur constante (Ik) et
--- circule à travers la première bobine d'excitation (14) dans le premier sens de courant (R),
--- le deuxième courant d'excitation (I2) est inférieur d'une valeur constante à la valeur constante (Ik) et
--- circule à travers la deuxième bobine d'excitation (15) dans le sens inverse (G), et
- pour lequel
-- pendant le premier ou le deuxième ou le troisième ou le quatrième quart de période est formée un première ou une deuxième ou une troisième ou une quatrième tension des deux potentiels,
-- une première différence de tension est formée à partir de la première et de la troisième tension, laquelle différence sert au calcul du signal de débit volumique,
-- une deuxième différence de tension est formée à partir de la deuxième et de la quatrième tension
-- un quotient est formé à partir de la deuxième différence de tension et de la première différence de tension,
-- le quotient est déterminé pendant une étape d'étalonnage du débitmètre magnéto-inductif avec un écoulement de turbulence homogène et est enregistré en tant que constante d'appareil dans le débitmètre,
-- des valeurs momentanées du quotient sont formées continuellement pendant le fonctionnement, lesquelles valeurs sont comparées avec la constante d'appareil, et
-- une alarme est déclenchée ou le signal de débit volumique est corrigé en cas de dépassement d'un seuil prédéfinissable.

13. Débitmètre magnéto-inductif pour un fluide s'écoulant dans une conduite, lequel comprend :
- un tube de mesure insérable dans la conduite, destiné à guider le fluide,
- un circuit de mesure et d'exploitation,
- un dispositif à bobines alimenté par le circuit de mesure et d'exploitation, lequel dispositif génère un champ magnétique traversant le tube de mesure, au moyen d'une première bobine d'excitation disposée sur le tube de mesure et d'une deuxième bobine d'excitation disposée sur le tube de mesure,
-- avec un premier générateur de courant d'excitation destiné à générer un premier courant d'excitation, lequel circule au moins temporairement à travers la première bobine d'excitation
-- avec un deuxième générateur de courant d'excitation destiné à générer un deuxième courant d'excitation, lequel circule au moins temporairement à travers la deuxième bobine d'excitation
- au moins deux électrodes de mesure destinées au prélèvement de potentiels, qui sont induits dans le fluide s'écoulant dans le tube de mesure et parcouru par le champ magnétique, ainsi que
- des moyens reliés au moins temporairement avec les électrodes de mesure, destinés à générer au moins un signal de mesure dérivé des potentiels induits dans le fluide, **caractérisé en ce que** le circuit de mesure et d'exploitation est configuré de telle manière,
que les deux courants d'excitation, c'est-à-dire la valeur de chaque courant d'excitation,
est réglable au moyen du premier générateur de courant d'excitation et au moyen du deuxième générateur de courant d'excitation, de sorte qu'une variation de l'intensité d'au moins l'un des courants d'excitation s'effectue de manière à ce que les intensités de champ magnétique moyennes des champs magnétiques partiels sont au moins temporairement différentes, et
- une inversion de l'un des deux courants d'excitation, c'est-à-dire la valeur de chaque courant d'excitation, s'effectue de manière à ce que les deux champs magnétiques partiels, dans le cas d'intensités de champ magnétique moyennes différentes, sont au moins temporairement opposés l'un par rapport à l'autre.
